# EUROPEAN PATENT APPLICATION

(11) **EP 3 396 193 A1**
(43) Date of publication of application: **31.10.2018**
(21) Application number: 16878528.5
(22) Date of filing: 14.12.2016
(51) Int. Cl.: F16D 65/092, B61H 5/00

(54) **BRAKE LINING FOR ROLLING STOCK AND DISC BRAKE FOR ROLLING STOCK PROVIDED WITH SAME**

(30) Priority: 25.12.2015 JP 2015255429
(71) Applicant: Nippon Steel & Sumitomo Metal Corporation, Tokyo 100-8071 (JP)
(72) Inventor: SAKAYAMA, Yuiko, Tokyo 100-8071 (JP); KATO, Takanori, Tokyo 100-8071 (JP); SAKAGUCHI, Atsushi, Tokyo 100-8071 (JP); MIYABE, Naruo, Tokyo 100-8071 (JP)
(74) Representative: Zimmermann & Partner Patentanwälte mbB
(86) International application number: PCT/JP2016/087305
(87) International publication number: WO 2017/110637

(57) **Abstract**

A railway brake lining (10) includes one or more primary friction members (11), one or more secondary friction members (12), and a base plate (20). Each of the primary friction members (11) is elastically fastened to the base plate (20) with a spring member in between. Each of the secondary friction members (12) is fixed on the base plate (20). A minimum distance between the friction members (11, 12) and a center of an axle of a railway vehicle is denoted by r1, and a maximum distance between the friction members (11, 12) and the center of the axle is denoted by r2. The centers of one or more of the primary friction members (11) are located in an area that is at a distance of {r1 + (r2 - r1)/3} to {r1 + 2×(r2 - r1)/3} from the center of the axle. The total slide contact area T1 of the primary friction members (11) and the total slide contact area T2 of the secondary friction members (12) satisfy 2/25 ≤ T2/(T1 + T2). Thereby, even at a time of harsh braking to stop a high-speed running railway vehicle, the contact between the brake disk and the friction members (11, 12) can be maintained in a good state.

## Description

### TECHNICAL FIELD

The present invention relates to a railway brake lining, and a railway disk brake using the same.

### BACKGROUND ART

In recent years, as railway vehicles become faster, disc brakes become used more commonly as braking devices for railway vehicles. A disc brake is a device that produces a braking force by friction between friction members of a brake lining and a brake disc.

As to brake linings, various suggestions have been provided. For example, Japanese Patent Application Publication No. 2011-214628 (Patent Literature 1) and Japanese Patent Application Publication No. 2011-214629 (Patent Literature 2) disclose railway brake linings.

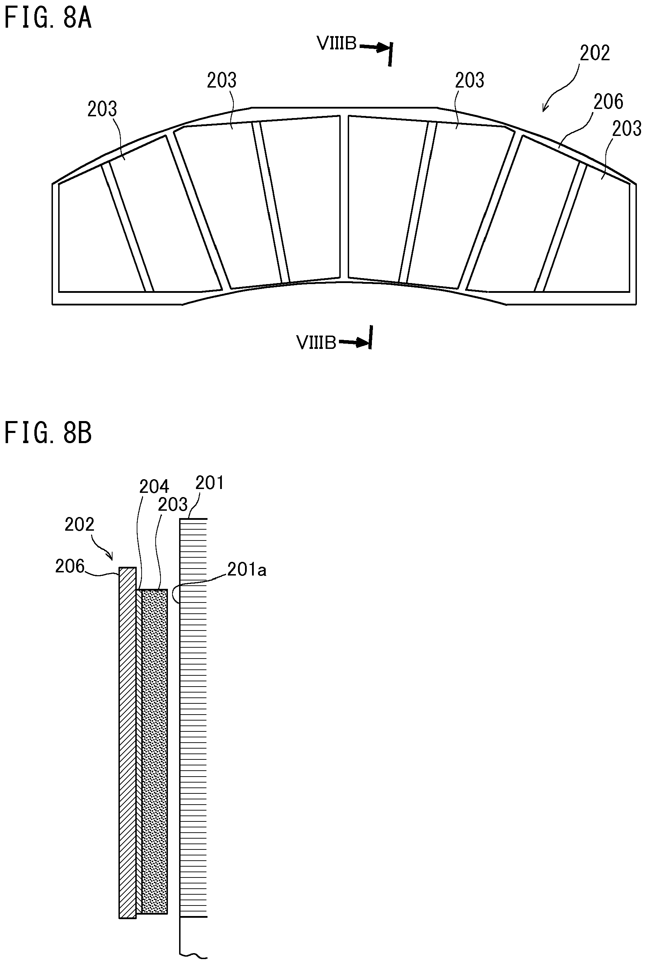

FIG. 8A is a plan view of a conventional brake lining, and FIG. 8B is a sectional view thereof along the line VIIIB-VIIIB in FIG. 8A. The brake lining 202 shown in FIGS. 8A and 8B includes a plurality of wide plate-like friction members 203, back metals 204 attached to the back surfaces of the respective friction members 203, and a base plate 206 supporting the friction members 203 and the back metals 204 from behind. The friction members 203 and the back metals 204 are firmly fixed on the base plate 206 by rivets. The brake lining 202 is disposed such that the front surfaces of the respective friction members 203 face a sliding surface 201a of a brake disk 201.

The base plate 206 of the brake lining 202 is fastened to a brake caliper. For braking, the brake caliper presses the brake lining 202 against the brake disk 201. By contact of the friction members 203 with the brake disk 201, the brake is applied to the vehicle. The pressure provided from the brake caliper to the brake lining 202 does not act on the entire brake lining 202 uniformly but acts on a specified portion concentrically because of the fastening structure of the brake lining to the brake caliper.

As the braking motion is repeated, the friction members of the disk brake become worn. If the loads for braking are not applied onto the friction members uniformly, it will cause the friction members to abrade significantly non-uniformly. The significant non-uniform abrasions of the friction members will degrade the performance of the brake lining and shorten the life of the brake lining. In order to prevent the non-uniform abrasions, it is preferred that all of the friction members make contact with the brake disk uniformly. Also, if the contact area where the friction members make contact with the brake disk for braking is small, the braking ability will be lowered and/or the non-uniform abrasions of the friction members will be promoted. Therefore, it is desired that the contact area between the friction members and the brake disk is large.

In the above-described conventional brake lining 202, since the plate-like friction members 203 are firmly secured to the base plate 206. Therefore, when the conventional brake lining 202 is used, the friction members are likely to abrade significantly non-uniformly, and the contact area where the friction members make contact with the brake disk may become insufficient for braking.

### CITATION LIST

### PATENT LITERATURES

[Patent Literature 1] Japanese Patent Application Publication No. 2011-214628
[Patent Literature 2] Japanese Patent Application Publication No. 2011-214629

### SUMMARY OF INVENTION

### TECHNICAL PROBLEMS

In view of the above situation, an object of the present invention is to provide a brake lining which can restrain non-uniform contacts of the friction members with a brake disk and a large decrease in the contact area between the brake disk and the friction members even in a harsh braking motion to stop a high-speed running railway vehicle.

### SOLUTIONS TO PROBLEMS

A brake lining according to an embodiment of the present invention is a railway brake lining configured to be pressed against a brake disk rotating together with an axle of a wheel of a railway vehicle to apply a brake to the railway vehicle. The railway brake lining includes a plurality of friction members, one or more spring members, and a base plate. The plurality of friction members includes one or more primary friction members and one or more secondary friction members. Each of the primary friction members is elastically fastened to the base plate with a respective one of the spring members between the primary friction member and the base plate. Each of the secondary primary friction members is fixed on the base plate. When a minimum distance between the plurality of friction members and a center of the axle is denoted by r1, and a maximum distance between the plurality of friction members and the center of the axle is denoted by r2, centers of one or more of the primary friction members are located in an area that is at a distance of {r1 + (r2 - r1)/3} to {r1 + 2×(r2 - r1)/3} from the center of the axle. A total slide contact area T1 of the primary friction members and a total slide contact area T2 of the secondary friction members satisfy 2/25 ≤ T2/(T1+T2).

A disk brake according to an embodiment of the present invention is a railway disk brake including a brake disk to rotate together with an axle of a wheel of a railway vehicle, and a brake lining to be pressed against the brake disk to apply a brake to the railway vehicle. The brake lining is the brake lining according to the present invention.

### ADVANTAGEOUS EFFECTS OF INVENTION

The present invention provides a brake lining which can restrain non-uniform contacts of the friction members with a brake disk and a large decrease in the contact area between the brake disk and the friction members even at a time of harsh braking to stop a high-speed running railway vehicle.

### BRIEF DESCRIPTION OF DRAWINGS

[FIG. 1] FIG. 1 is a graph showing the results of an analysis of displacement of a brake disk at a time of harsh braking.
[FIG. 2] FIG. 2 is a schematic diagram of a brake lining according to an embodiment of the present invention.
[FIG. 3] FIG. 3 is a schematic sectional view of a primary friction member (movable friction member) of the brake lining according to the embodiment.
[FIG. 4] FIG. 4 is a schematic sectional view of a secondary friction member (fixed friction member) of the brake lining according to the embodiment.
[FIG. 5] FIG. 5 is a diagram showing arrangement of friction members.
[FIG. 6A] FIG. 6A is a plan view schematically showing arrangement of friction members of a brake lining according to an inventive example 1.
[FIG. 6B] FIG. 6B is a plan view schematically showing arrangement of friction members of a brake lining according to an inventive example 2.
[FIG. 6C] FIG. 6C is a plan view schematically showing arrangement of friction members of a brake lining according to an inventive example 3.
[FIG. 6D] FIG. 6D is a plan view schematically showing arrangement of friction members of a brake lining according to an inventive example 4.
[FIG. 6E] FIG. 6E is a plan view schematically showing arrangement of friction members of a brake lining according to an inventive example 5.
[FIG. 6F] FIG. 6F is a plan view schematically showing arrangement of friction members of a brake lining according to an inventive example 6.
[FIG. 6G] FIG. 6G is a plan view schematically showing arrangement of friction members of a brake lining according to an inventive example 7.
[FIG. 6H] FIG. 6H is a plan view schematically showing arrangement of friction members of a brake lining according to an inventive example 8.
[FIG. 6I] FIG. 6I is a plan view schematically showing arrangement of friction members of a brake lining according to an inventive example 9.
[FIG. 6J] FIG. 6J is a plan view schematically showing arrangement of friction members of a brake lining according to an inventive example 10.
[FIG. 6K] FIG. 6K is a plan view schematically showing arrangement of friction members of a brake lining according to an inventive example 11.
[FIG. 7A] FIG. 7A is a plan view schematically showing arrangement of friction members of a brake lining according to a comparative example 1.
[FIG. 7B] FIG. 7B is a plan view schematically showing arrangement of friction members of a brake lining according to a comparative example 2.
[FIG. 7C] FIG. 7C is a plan view schematically showing arrangement of friction members of a brake lining according to a comparative example 3.
[FIG. 8A] FIG. 8A is a plan view schematically showing a conventional brake lining.
[FIG. 8B] FIG. 8B is a schematic sectional view along the line VIIIB-VIIIB shown in FIG. 8A.

### DESCRIPTION OF EMBODIMENTS

An embodiment of the present invention will hereinafter be described. In the following description of the embodiment, some examples are given, but the present invention is not limited to the examples. In the following description, specific values and materials may be given. However, these values and materials are merely examples, and other values and materials may be used as long as the advantageous effects of the present invention can be obtained.

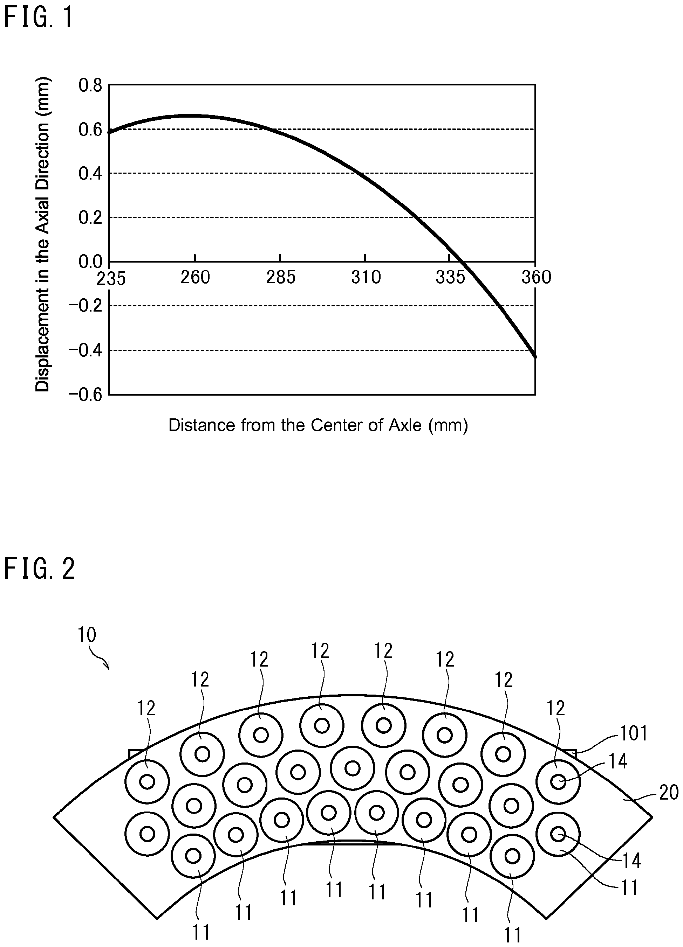

The inventors evaluated performance of a brake lining under various conditions. As a result, they found that a conventional brake lining has a risk of developing non-uniform contacts of friction members with a brake disk, which causes a large decrease in contact area. The inventors made a finite element analysis on the displacement of the brake disk surface during braking for an emergency stop from a run at a speed of 360 km/h. FIG. 1 shows the result. In FIG. 1, the horizontal axis indicates distance from the center of an axle. The position where the horizontal axis is 235 mm is the inner peripheral edge of the brake disk. The position where the horizontal axis is 360 mm is the outer peripheral edge of the brake disk. In the range from the inner peripheral edge and the outer peripheral edge, friction members make contact with the brake disk. In FIG. 1, the vertical axis indicates displacement in the axial direction of the axle. The position where the displacement is zero is a position of the disk surface of a new brake disk before use. A positive displacement indicates that the disk surface is displaced toward the brake lining.

At a time of applying a sudden brake to stop a high-speed running vehicle, as shown in FIG. 1, different behaviors were seen on various positions of the disk. More specifically, the inner periphery of the disk became bloated and displaced toward the brake lining, while the outer periphery of the disk was displaced away from the brake lining. Based on this new finding, the inventors studied how to obtain a brake lining which can achieve uniform contact with a brake disk and has a large contact area with the brake disk, and the inventors have made the invention described below.

### (Brake Lining)

A brake lining according to the present invention is a brake lining for a railway vehicle. This brake lining is pressed against a brake disk rotating together with an axle of a wheel of the railway vehicle to apply a brake to the railway vehicle. The brake lining includes a plurality of friction members, a plurality of fastening members, one or more spring members, and a base plate.

When a brake caliper presses the base plate directly or indirectly, the friction members of the brake lining are pressed against the brake disk, and the brake is applied to the vehicle. For example, the base plate is fastened to a guide plate, and when the brake caliper presses the guide plate, the friction members are pressed against the brake disk.

There are no particular limits to the friction members, the fastening members, the spring members and the base plate, and these members may be of conventional types. For example, the friction members may be made of a material, such as a copper-based sintered material, a resin material or the like. For example, each of the friction members may have a circular or polygonal (quadrangular, hexagonal or the like) planar shape. The fastening members may be rivets, for example. The spring members may be disk springs, plate springs, coil springs or the like. The base plate may be a metal plate, for example.

The plurality of friction members includes one or more primary friction members and one or more secondary friction members. The primary friction members and the secondary friction members may be the same or different. Typically, the primary friction members and the secondary friction members are made of the same material and have the same planar shape. There are no limits to the number of primary friction members and the number of secondary friction members. For example, the number of primary friction members and the number of secondary friction members are each 1 to 50 (for example, 2 to 30).

The spring members are disposed between the respective primary friction members and the base plate so that the primary friction members can be elastically supported by the base plate. Typically, the primary friction members are respectively fixed on back metals. In this case, the spring members are disposed between the respective back metals and the base plate so that the primary friction members can be elastically supported by the base plate. The fastening members, such as rivets, are used for the fastening of the primary friction members to the base plate. The secondary friction members are fixed on the base plate. Unlike the primary friction members, the secondary friction members are fixed on the base plate with no spring members in between. The secondary friction members being fixed on the base plate includes a case where the secondary friction members are rotatably fastened to the base plate by fastening members such as rivets. In the following paragraphs, the primary friction members may be referred to as "movable friction members", and the secondary friction members may be referred to as "fixed friction members".

The slide contact areas of the friction members may be the same or different. The "slide contact area" is the area of a part of the brake-disk-facing surface of a friction member, the part being designed to contact the brake disk. For example, all the friction members (the primary and the secondary friction members) are the same in slide contact area per each. In a typical case, all the friction members are the same in planar shape.

Since the primary friction members are elastically fastened to the base plate, the primary friction members are easy to follow a displacement of the brake disk. Meanwhile, since each of the primary friction members are fastened to the base plate with a spring member in between, the use of the primary friction members complicates the manufacturing process and raises the manufacturing cost. In terms of economics, therefore, it is not preferable that all the friction members are the primary friction members.

The minimum distance between the friction members and the center of the axle is denoted by r1. More specifically, among the slide contact surfaces of all the friction members, the one located closest to the center of the axle is chosen, and the distance between the chosen slide contact surface and the center of the axle is denoted by r1. Also, among the slide contact surfaces of all the friction members, the one located farthest from the center of the axle is chosen, and the distance between the chosen slide contact surface and the center of the axle is denoted by r2. The "slide contact surface of a friction member" is a part of the surface of a friction member, the part of the surface being designed to contact the brake disk. A part of the surface of the disk brake which will be referred to as a "slide contact surface of the disk brake" is the part of the surface designed to contact the friction members. The "center of the axle" is the center of the axle in the plane including the slide contact surfaces of the friction members.

In the brake lining according to the present invention, the centers of one or more of the primary friction members are located in an area that is at a distance of {r1 + (r2 - r1)/3} to {r1 + 2 × (r2 - r1)/3} from the center of the axle. The sum of the slide contact areas of the primary friction members, which will be referred to as a total slide contact area T1, and the sum of the slide contact areas of the secondary friction members, which will be referred to as a total slide contact area T2, satisfy 2/25 ≤ T2/(T1+T2). In this structure, non-uniform contacts of the friction members with the brake disk and a large decrease in the contact area between the brake disk and the friction members can be suppressed.

In this specification, the area where the friction members are arranged is divided into three sections, namely, an inner peripheral section S1, a central section S2 and an outer peripheral section S3. The inner peripheral section S1 is a section that is at a distance of r1 to {r1 + (r2 - r1)/3} from the center of the axle. The central section S2 is a section that is at a distance of {r1 + (r2 - r1)/3} to {r1 + 2×(r2 - r1)/3} from the center of the axle. The outer peripheral section S3 is a section that is at a distance of {r1 + 2×(r2 - r1)/3} to r2 from the center of the axle.

When each of the friction members has a circular planar shape, the center of the circular shape is considered as the center of the friction member. When each of the friction members has any planar shape other than a circular shape (for example, polygonal shape), the center of gravity of the planar shape is considered as the center of the friction member. When the center of a friction member is located on the border of two adjacent sections, a half (0.5) of the center is counted as being in each of the two sections.

The sum of the slide contact areas of the primary friction members of which centers are located in the central section S2 is referred to as a total slide contact area t1_{(S2)}, and the sum of the slide contact areas of the secondary friction members of which centers are located in the central section S2 is referred to as a total slide contact area t2_{(S2)}. In the brake lining according to the present invention, t1_{(S2)} and t2_{(S2)} may satisfy 4/9 ≤ t1_{(S2)}/(t1_{(S2)} + t2_{(S2)}) ≤ 1. For example, all of the friction members of which centers are located in this section (central section S2) may be primary friction members.

The sum of the slide contact areas of the primary friction members of which centers are located in the area that is at a distance of r1 to {r1 + 2×(r2 - r1)/3} from the center of the axle (in the inner peripheral section S1 and the central section S2) is referred to as a total slide contact area t1_{(S1-S2)}, and the sum of the slide contact areas of the secondary friction members of which centers are located in this area is referred to as a total slide contact area t2_{(S1-S2)}. In the brake lining according to the present invention, t1_{(S1-S2)} and t2_{(S1-S2)} may satisfy 9/17 ≤ t1_{(S1-S2)}/(t1_{(S1-S2)} + t2_{(S1-S2)}) ≤ 1. For example, all of the friction members of which centers are located in the inner peripheral section S1 or the central section S2 may be primary friction members.

In a typical example, the friction members are arranged such that the centers of two or more friction members are located in each of the inner peripheral section S1, the central section S2 and the outer peripheral section S3. For example, the centers of the friction members located in the inner peripheral section S1 are arranged on the circumference of a circle around the axle. Similarly, the centers of the friction members located in the central section S2 are arranged on the circumference of a circle around the axle. Similarly, the centers of the friction members located in the outer peripheral section S3 are arranged on the circumference of a circle around the axle. Also, the friction members are arranged horizontally symmetrically (line symmetrically) with respect to a line connecting the circumferential center of the area where all of the friction members are arranged and the center of the axle. In other words, the friction members are arranged in line symmetrically with respect to a line connecting the circumferential center of the base plate and the center of the axle. It is easy to assemble the brake lining with this friction member arrangement. In this case, also, the state of contact between the friction members and the brake disk rotating forward is equivalent to the state of contact between the friction members and the brake disk rotating backward, and the performance of the brake lining is stable.

### (Disk Brake)

A disk brake according to the present invention includes a brake disk, and a brake lining to be pressed against the brake disk to apply a brake to a railway vehicle. The brake lining is the brake lining according to the present invention. The brake lining has been described, and a repetitious description of the brake lining will be avoided.

There are no particular limits to the components (brake disk, brake caliper, etc.) except for the brake lining, and the components may be of conventional types. The brake caliper presses the brake lining against the brake disk, and thereby, a braking force is applied to the wheel. The brake disk is a disk which rotates together with an axle of a wheel of the railway vehicle. The brake disk is generally fastened to a wheel or an axle. The center of rotation of the disk-shaped or ring-shaped brake disk is coincident with the center of the axle. In this specification, therefore, the term "the center of the axle" can be read as "the center of rotation of the brake disk".

### (Embodiment)

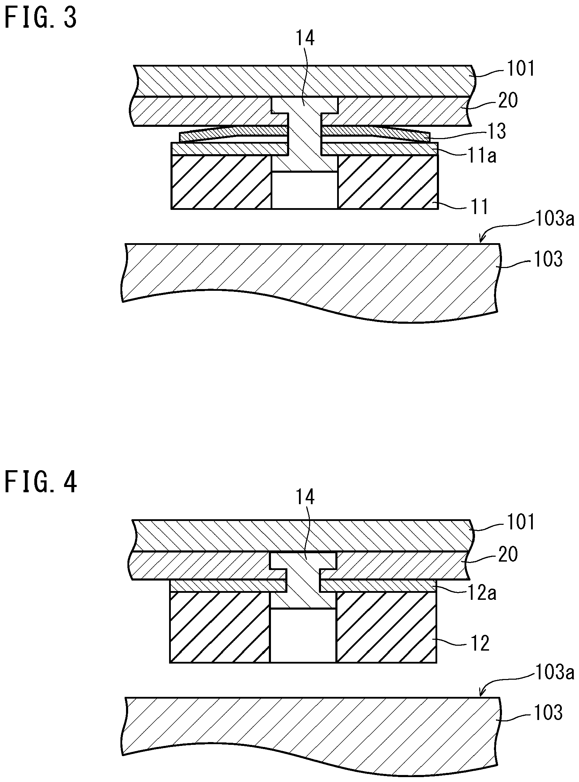

A brake lining and a disk brake according to an embodiment of the present invention will hereinafter be described. FIG. 2 shows the brake lining 10 according to the embodiment when viewed from the side of a brake disk. For reference, a guide plate 101 is also shown in FIG. 2. The brake lining 10 includes a plurality of friction members and a base plate 20. The plurality of friction members includes one or more movable friction members (primary friction member) 11 and one or more fixed friction members (secondary friction member) 12. Each of the movable friction members 11 and the fixed friction members 12 is in the shape of a circle with a through hole in the center. FIG. 3 is a sectional view of the brake lining along a line near one of the movable friction members 11. FIG. 4 is a sectional view of the brake lining along a line near one of the fixed friction members 12.

The back surface of the movable friction member 11 is fixed on a back metal 11a. In the center of the movable friction member 11 and the back metal 11a, a through hole is made to pierce through the movable friction member 11 and the back metal 11a so that a fastening member 14 can be inserted therein. The movable friction member 11 is movably fastened to the base plate 20 by a fastening member 14. The fastening member 14 is a rivet. A spring member 13 is disposed between the back metal 11a and the base plate 20. Therefore, the movable friction member 11 is elastically fastened to the base plate 20 and thereby is displaced according to the force applied thereto.

The back surface of the fixed friction member 12 is fixed on the back metal 12a. The back metal 11a and the back metal 12a may be the same or different. The fixed friction member 12 is inelastically fastened to the base plate 20 with no spring members in between. The fixed friction member 12 may be fixed on the base plate 20 by a fastening member 14 as shown in FIG. 4. In this case, in the center of the fixed friction member 12 and the back metal 12a, a through hole is made to pierce through the fixed friction member 12 and the back metal 12a so that a fastening member 14 can be inserted therein. Since the fixed friction member 12 is fixed on the base plate 20 with no spring members in between, the fixed friction member 12 can be made thicker than the movable friction member 11.

The base plate 20 is supported by a brake caliper (not shown). More specifically, the base plate 20 is supported by the brake caliper via the guide plate 101, and for braking, a force is applied from the brake caliper. The movable friction members 11 and the fixed friction members 12 are disposed to face a sliding surface 103a of the brake disk 103. Thus, the disk brake according to this embodiment includes a brake lining 10, a guide plate 101, a brake caliper, and a brake disk 103. The base plate 20 may be supported by the brake caliper directly not via the guide plate 101.

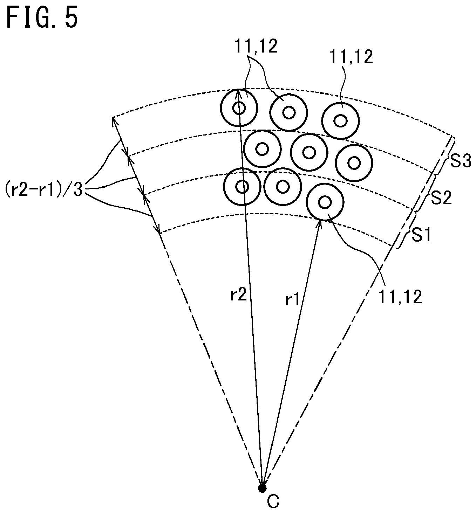

The inner peripheral section S1, the central section S2 and the outer peripheral section S3 mentioned above are described in reference to FIG. 5. FIG. 5 shows only a part of a friction member. The friction member shown in FIG. 5 may be the friction member 11 or the friction member 12, and FIG. 5 does not show discrimination between the friction members 11 and 12.

In FIG. 5, the center of the axle is indicated by C. The distance between the center of the axle C and the nearest portion thereto of the sliding surface of the friction member 11 or 12 is referred to as a distance r1. The distance between the center of the axle C and the farthest portion therefrom of the sliding surface of the friction member 11 or 12 is referred to as a distance r2. The area that is at a distance from r1 to r2 from the center of the axle C is divided into three sections according to the distance from the center of the axle C. Specifically, the inner peripheral section S1 is a section that is at a distance of r1 to {r1 + (r2 - r1)/3} from the center of the axle C. The central section S2 is a section that is at a distance of {r1 + (r2 - r1)/3} to {r1 + 2×(r2 - r1)/3} from the center of the axle C. The outer peripheral section S3 is a section that is at a distance of {r1 + 2×(r2 - r1)/3} to r2 from the center of the axle C. In the brake lining according to the present invention, the friction members 11 and 12 are arranged to satisfy the above-described conditions.

### EXAMPLES

The present invention will hereinafter be described in more detail by giving some examples. Brake linings according to inventive examples and comparative examples were evaluated by finite element analysis. For the analysis, a thermally deformed disk was used as a brake disk. The pressing load on the brake lining was 7.2kN.

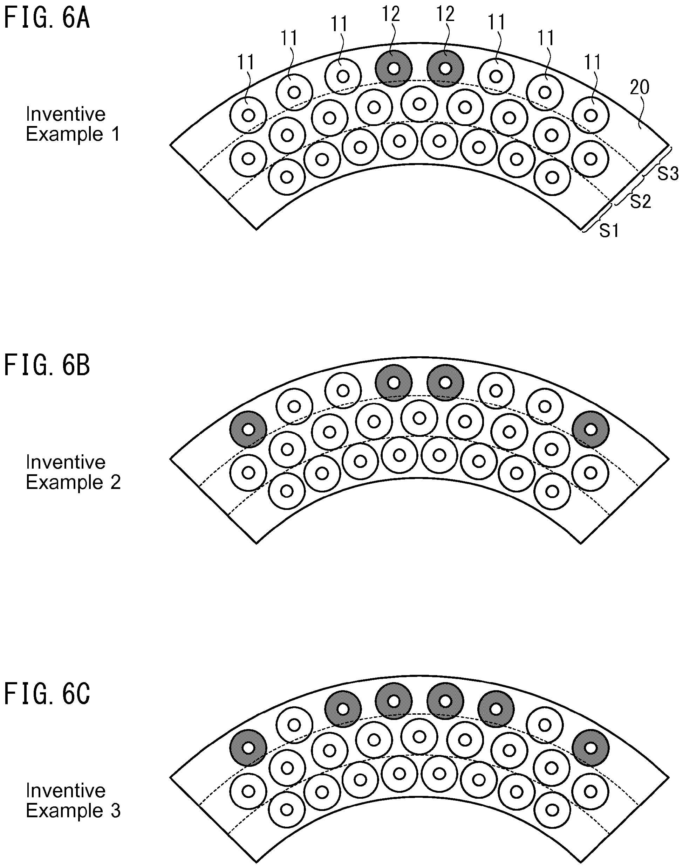

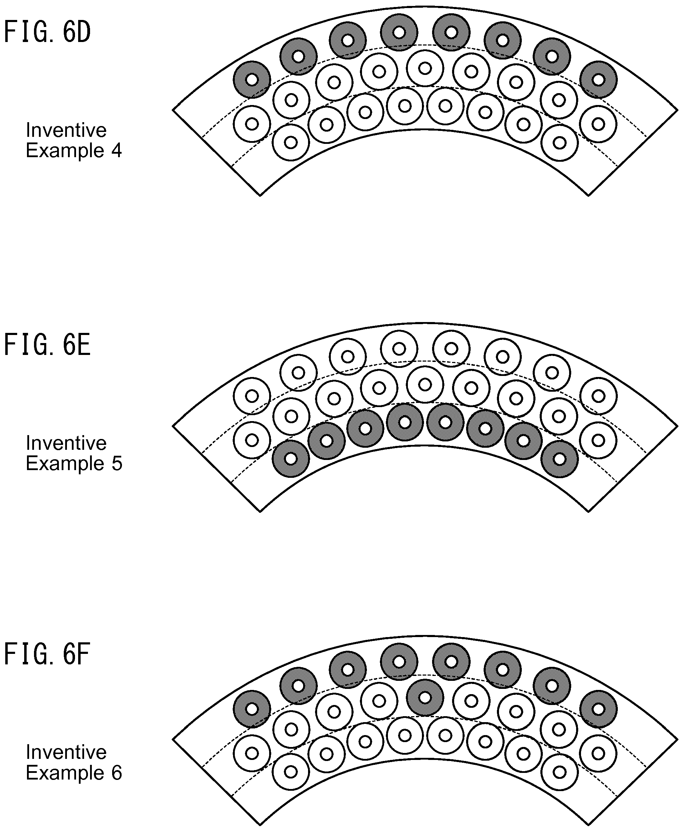

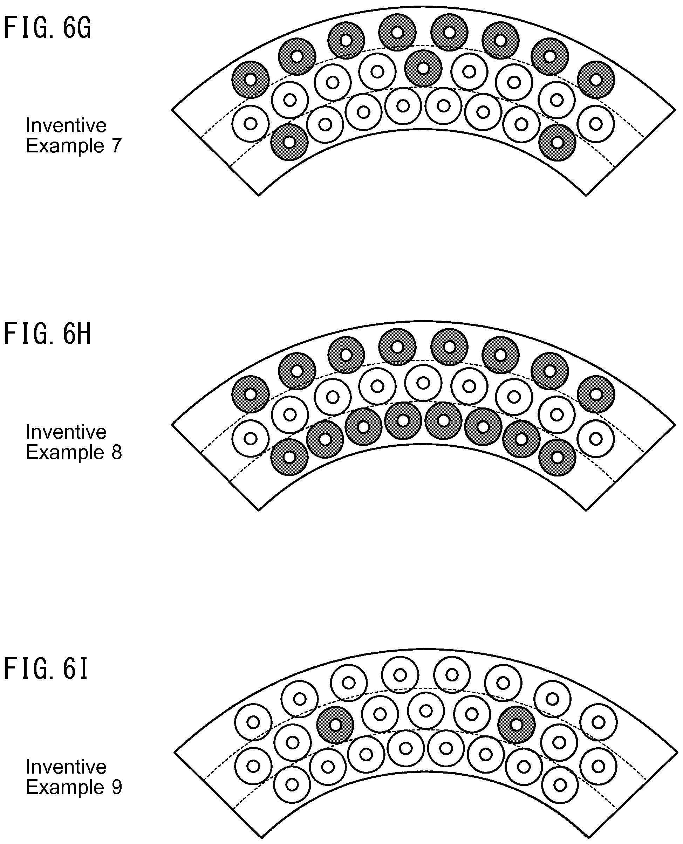

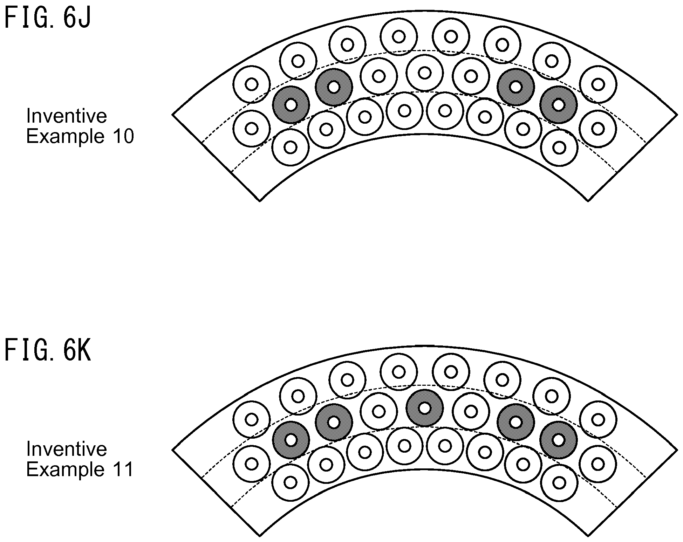

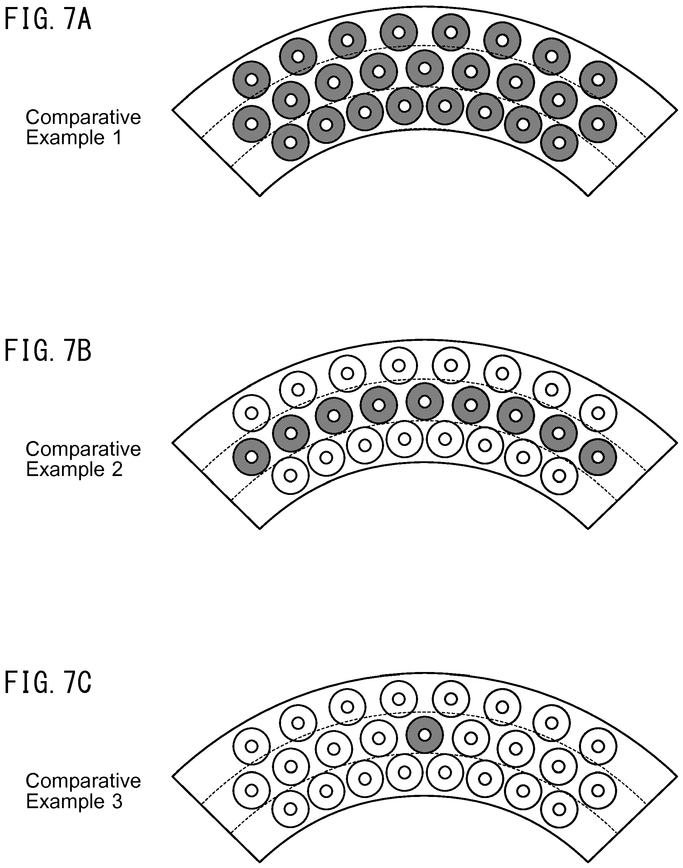

FIGS. 6A to 6K show arrangements of the friction members on the brake linings according to the inventive examples 1 to 11, respectively. FIGS. 7A to 7C show arrangements of the friction members on the brake linings according to the comparative examples 1 to 3, respectively. For facilitation of understanding, in these figures, the fixed friction members 12 are painted in black. Also, reference symbols are provided to only some of the components of the inventive example 1 shown in FIG. 6A.

The movable friction members 11 and the fixed friction members 12 are the same in material and planar shape. Therefore, all the friction members are equal in slide contact area. For the finite element analysis of these examples, the respective brake linings shown in the figures were cut in half, and the halves of the brake linings were used as models. In each of the examples, the friction members are arranged horizontally symmetrically with respect to a symmetrical axis (line symmetrically).

Table 1 shows what number of friction members have their centers in each of the inner peripheral section S1, in the central section S2 and in the outer peripheral section S3 in regard to each of the brake linings according to the inventive examples and the comparative examples. Specifically, Table 1 shows the ratio expressed by (number of movable friction members 11 of which centers are located in the section)/(total number of friction members 11 and 12 of which centers are located in the section) with respect to each section. Since the friction members are equal in slide contact area, the ratios pertaining to the number of friction members shown in Table 1 are equivalent to the ratios pertaining to the slide contact area.

**Table 1**

| | Ratio "(Number of movable friction members)/(Total number of friction members)" | | | | | | | | | | | | | |
|---|---|---|---|---|---|---|---|---|---|---|---|---|---|---|
| | Inventive Examples | | | | | | | | | | | Comparative Examples | | |
| | 1 | 2 | 3 | 4 | 5 | 6 | 7 | 8 | 9 | 10 | 11 | 1 | 2 | 3 |
| Inner Peripheral Section S1 | 8/8 | 8/8 | 8/8 | 8/8 | 0/8 | 8/8 | 6/8 | 0/8 | 8/8 | 8/8 | 8/8 | 0/8 | 8/8 | 8/8 |
| Central Section S2 | 9/9 | 9/9 | 9/9 | 9/9 | 9/9 | 8/9 | 8/9 | 9/9 | 7/9 | 5/9 | 4/9 | 0/9 | 0/9 | 8/9 |
| Outer Peripheral Section S3 | 6/8 | 4/8 | 2/8 | 0/8 | 8/8 | 0/8 | 0/8 | 0/8 | 8/8 | 8/8 | 8/8 | 0/8 | 8/8 | 8/8 |
| Whole Area | 23/25 | 21/25 | 19/25 | 17/25 | 17/25 | 16/25 | 14/25 | 9/25 | 23/25 | 21/25 | 20/25 | 0/25 | 16/25 | 24/25 |

In the brake linings according to the inventive examples 1-11, there is at least one movable friction member 11 of which center is located in the central section S2. The brake linings according to the inventive examples 1-11 satisfy 2/25 ≤ T2/(T1+T2). On the other hand, in the brake linings according to the comparative examples 1 and 2, there are no movable friction members 11 of which centers are located in the central section S2. In the brake lining according to the comparative example 3, T2/(T1+T2) = 1/25.

Table 2 shows the analysis results. The "contact area" in Table 2 means the contact area between the friction members and the brake pad during a braking action. The "standard deviation" in Table 2 means variation among the 25 friction members in load applied thereto. In terms of braking force and prevention of non-uniform abrasions of the friction members, the contact area is preferably large, and the standard deviation is preferably small.

**Table 2**

| | Inventive Examples | | | | | | | | | | | Comparative Examples | | |
|---|---|---|---|---|---|---|---|---|---|---|---|---|---|---|
| | 1 | 2 | 3 | 4 | 5 | 6 | 7 | 8 | 9 | 10 | 11 | 1 | 2 | 3 |
| Contact Area [mm²] | 1345 | 1330 | 1332 | 1296 | 1182 | 1219 | 1186 | 1175 | 984 | 1102 | 1123 | 949 | 1089 | 977 |
| Standard Deviation [N] | 215 | 207 | 190 | 178 | 174 | 256 | 255 | 156 | 296 | 267 | 245 | 320 | 367 | 454 |

As shown in Table 2, the brake linings according to the inventive examples 1 to 11 were small in standard deviation, as compared with the brake linings according to the comparative examples 1 to 3. Also, the brake linings according to the inventive examples 1 to 11 were large in contact area, as compared with the brake linings according to the comparative examples 1 to 3. Thus, each of the brake linings according to the inventive examples 1 to 11 had a large contact area and a small standard deviation.

The brake linings according to the inventive examples 1 to 5 and 8, wherein all of the friction members of which centers are located in the central section S2 are movable friction members 11, had a good result that the standard deviation was not more than 215 N. The brake linings according to the inventive examples 1 to 4, wherein all of the friction members of which centers are located in the inner peripheral section S1 or in the central section S2 are movable friction members 11, had excellent results that the contact area was not less than 1296 mm² and that the standard deviation was not more than 215 N.

The reasons why brake linings according to the present invention can achieve good results are not clear at present. However, as shown in FIG. 1, the portion of the brake disk facing the central section S2 has a great displacement due to thermal expansion and has a great surface inclination. Therefore, it is significant to dispose one or more movable friction members 11 in the central section S2. Also, the portion of the brake disk facing the inner peripheral section S1 has a particularly great displacement due to thermal expansion. Therefore, disposing movable friction members 11 both in the inner peripheral section S1 and in the central section S2 could bring more beneficial results.

### INDUSTRIAL APPLICABILITY

The present invention is applicable to brake linings for railway vehicles and to railway brake disks using the brake linings.

### LIST OF REFERENCE SYMBOLS

10: brake lining
11: movable friction member (primary friction member)
12: fixed friction member (secondary friction member)
13: spring member
14: fastening member
20: base plate
100: disk brake
101: guide plate
103: brake disk

## Claims

1. A railway brake lining configured to be pressed against a brake disk rotating together with an axle of a wheel of a railway vehicle to apply a brake to the railway vehicle, the railway brake lining comprising:
a plurality of friction members, one or more spring members, and a base plate,
wherein:
the plurality of friction members includes one or more primary friction members and one or more secondary friction members;
each of the primary friction members is elastically fastened to the base plate with a respective one of the spring members between the primary friction member and the base plate;
each of the secondary primary friction members is fixed on the base plate;
when a minimum distance between the plurality of friction members and a center of the axle is denoted by r1, and a maximum distance between the plurality of friction members and the center of the axle is denoted by r2,
centers of one or more of the primary friction members are located in an area that is at a distance of {r1 + (r2 - r1)/3} to {r1 + 2×(r2 - r1)/3} from the center of the axle; and
a total slide contact area T1 of the primary friction members and a total slide contact area T2 of the secondary friction members satisfy 2/25 ≤ T2/(T1+T2).

2. The railway brake lining according to claim 1, wherein all of the friction members of which centers are located in the area are the primary friction members.

3. The railway brake lining according to claim 1, wherein all of the friction members of which centers are located in an area that is at a distance of r1 to {r1 + 2×(r2 - r1)/3} from the center of the axle are the primary friction members.

4. The railway brake lining according to any one of claims 1 to 3, wherein centers of two or more of the plurality of friction members are located in an area that is at a distance of r1 to {r1 + (r2 - r1)/3} from the center of the axle, centers of two or more of the plurality of friction members are located in an area that is at a distance of {r1 + (r2 - r1)/3} to {r1 + 2×(r2 - r1)/3} from the center of the axle, and centers of two or more of the plurality of friction members are located in an area that is at a distance of {r1 + 2×(r2 - r1)/3} to r2 from the center of the axle.

5. The railway brake lining according to any one of claims 1 to 4, wherein the plurality of friction members are arranged line symmetrically with respect to a line connecting a circumferential center of an area where all of the friction members are located and the center of the axle.

6. A railway disk brake including a brake disk to rotate together with an axle of a wheel of a railway vehicle, and a brake lining to be pressed against the brake disk to apply a brake to the railway vehicle, wherein
the brake lining is the brake lining according to any one of claims 1 to 5.
